# EUROPEAN PATENT SPECIFICATION

(11) **EP 1 697 549 B1**
(45) Date of publication and mention of the grant of the patent: **24.08.2011**
(21) Application number: 02781661.0
(22) Date of filing: 17.12.2002
(51) Int. Cl.: C22B 23/00

(54) **A PROCESS FOR EXTRACTION OF NICKEL FROM LOW GRADE CHROMITE ORE**
VERFAHREN ZUR GEWINNUNG VON NICKEL AUS MINDERWERTIGEM CHROMITERZ
PROCEDE D'EXTRACTION DE NICKEL A PARTIR DE CHROMITE PAUVRE

(43) Date of publication of application: 06.09.2006
(73) Proprietor: Council of Scientific and Industrial Research, New Delhi 110 001 (IN); National Aluminium Company Limited, Bhubaneswar 751 013 (IN); National Mineral Development Corporation Limited, Hyderabad, Andhra Pradesh 500 028 (IN)
(72) Inventor: DAS, Radhanath, Prasad, Hyderabad 500 007 Andhra Pradesh (IN); TRIPATHY, Anil, Kanta, Hyderbad 500 007 Andhra Pradesh (IN); ANAND, Sashi, Hyderabad 500 007 Andhra Pradesh (IN); DAS, Sudipta, Hyderabad 500 007 Andhra Pradesh (IN); BEHERA, Snehasis, Hyderabad 500 007 Andhra Pradesh (IN); MURTHY, B., V. Raman, Hyderabad 500 007 Andhra Pradesh (IN); BHOI, Bhagyadhar, Hyderabad 500 007 Andhra Pradesh (IN); DATTA, Parthasarathi, Hyderabad 500 007 Andhra Pradesh (IN); GHOSH, Malay, Kumar, Hyderabad 500 007 Andhra Pradesh (IN); SANJAY, Kali, Hyderabad 500 007 Andhra Pradesh (IN); DAS, Subir, Hyderabad 500 007 Andhra Pradesh (IN); SUBBAIAH, Tondepu, Hyderabad 500 007 Andhra Pradesh (IN); RAO, Karnam, Srinivas, Hyderabad 500 007 Andhra Pradesh (IN); BHATTACHARYA, Indira, Narayan, Hyderabad 500 007 Andhra Pradesh (IN); PARLIKAR, Ramchandra, Nagesh, Hyderabad 500 007 Andhra Pradesh (IN); YUGANDHAR, Gajula, Venkata, Hyderabad 500 133, Andhra Pradesh (IN); ASHUTOSH, Ugle, Hyderabad 500 007 Andhra Pradesh (IN); SIMHA, Hari, Hyderabad 500 007 Andhra Pradesh (IN); RAO, Kataram, Rajeswara, Hyderabad 500 007 Andhra Pradesh (IN); PRASAD, Kodli Hiranya Varna, Hyderabad 500 007 Andhra Pradesh (IN); SINGHVI, Rajendra Kumar, Hyderabad 500 007 Andhra Pradesh (IN); SINGH, Vakil, Hyderabad 500 007, Andra Pradesh (IN); MITTAL, Baij Nath, Hyderabad 500 007, Andhra Pradesh (IN); AGARWAL, Bhuban Lal, Hyderabad 500 007, Andhra Pradesh (IN)
(74) Representative: Curtis, Philip Anthony
(86) International application number: PCT/IB2002/005430
(87) International publication number: WO 2004/055225

(56) References cited:
- EP-A- 0 918 094
- US-A- 1 487 145
- US-A- 2 363 315
- US-A- 2 400 114
- US-A- 2 829 963
- US-A- 3 929 468
- BANERJEE G.N. ET AL.: "Studies on reduction roasting of chromite overburden in a multiple hearth furnace for extraction of nickel and cobalt" TRANSACTIONS OF THE INDIAN INSTITUTE OF METALS, vol. 54, no. 5, October 2001 (2001-10), pages 193-198, XP009015045 India

## Description

### Technical Field

The present invention relates to a process for the extraction of nickel from low-grade chromite ore. Particularly, the present invention relates to a process for the extraction of nickel and cobalt from low-grade chromite ore.

### Background Art

Nickel is a strategic metal which finds use in steel, chemical, cryogenics, food processing, and aerospace industries. The present consumption of nickel in India is estimated to be ~20,000 tons per annum (tpa), and its annual growth rate is 5-7%. With rapid industrial growth, the demand for ferro-nickel is likely to exceed the projected figure. Most of the demand for nickel is presently being met through imports incurring foreign exchange worth of ~Rs.1000 crores per year. Cobalt is also a strategic metal and its demand in India is ~150 tpa. In the present process cobalt is recovered as a by-product. The only nickel deposit in India is in the Sukinda region of Orissa. The resources are estimated to be approximately 32 million tons in lateritic deposits of Sukinda region having ~1% nickel in the non-chromite and approximately 200 million tonne as low-grade chromite ore having an average of 0.7% nickel. For any commercial exploitation of Sukinda deposit for reasonable period of time low grade chromite ore will be the largest resource. Large stock piling of low-grade ore (which cannot be exploited for recovery of chromite) in Sukinda region has lead to environmental problem. It destroys natural forests around the mines and may contribute hexavalent chromium to water stream. In the world, presently there is no operating plant using such low-grade nickel containing materials particularly the low-grade chromite ore.

The major oxide ore deposits are in Indonesia, Phillipines, Cuba, Dominical Republic, Colombia, and New Caledonia. While the Colombian ore is perhaps the richest with more than 2.9% nickel, the poorest ores being commercially used are from Nicaro, Cuba and Kazakstan, containing - 1.1% nickel. The discarded low grade chromite ore generated at Sukinda region of Orissa, India contains in an average only ~0.7% nickel.

Reference may be made to one of the conventional methods for dissolution of nickel from these laterites by acid pressure leaching for which a commercial plant at Moa Bay is in operation (E.T Carlson, C.S Simons, Journal of Metals, 1960, 198(3), p 206-213) and another plant based on pressure leaching-solvent extraction has been set up in Australia.

The other method is by reduction-roasting followed by oxidative ammoniacal leaching and is named as Caron's process (M.S. Caron, United State Patent 1.487,145. March 18,1924). A number of commercial plants including one at Nicaro, Cuba and the other at Greenvale, Australia are in operation. Many International Conferences have since been devoted to the advances in metallurgy of nickel and cobalt (e.g., International Laterite Symposium, AIME-SME Annual Meeting, New Orleans, February 1979, International Symposium on Nickel Metallurgy held at Montreal 1986, Symposium on Metallurgy of Nickel and Cobalt, held at Arizona, Jan 25th to 28th, 1988, Nickel and Cobalt 97-International Symposium held at Sudbury, Ontario, Canada during Aug.17-20 1997). The most widely commercially applicable process is still the Caron's process (M.H. Caron, Journal of Metals, 1950, vol. 188(1), p 67-90). In this process the nickel ore is reduced and treated with ammonia-ammonium carbonate solution in the presence of compressed air. During leaching the reduced nickel and cobalt form soluble amine complexes and the reduced iron comes first to solution as ferrous amine and subsequently gets oxidized to hydrated ferric oxide. The time required for almost complete dissolution of desired metals and precipitation of iron in the commercial plants is about six hours. Although most of the nickel in the world is present as oxide, due to ease of beneficiation, sulphides of nickel are the major source of nickel production. But with depletion of good grade sulphide ore, slowly the use of oxides for nickel extraction is increasing. Currently, roughly about 40% of the nickel is produced from oxide ore.

G. N. Banerjee et al, disclose in "Studies on Reduction Roasting of Chromite Overburden in a Multiple Hearth Furnace for Extraction of Nickel and Cobalt" (Trans. Indian Inst. Met.; Vol. 54; No. 5; October 2001; pp. 193-198) a study relating to the extraction of nickel and cobalt from chromite overburden (COB) of Sukinda, Orissa, containing 0.3% to 1.1% Ni and traces of cobalt (0.02% - 0.06%) using reduction roasting followed by an ammoniacal leaching process.

### Drawbacks of the earlier processes

(i) All the processes for extracting nickel and cobalt known as of date use nickel ore containing ~1.1 to 1.5% Ni. The low-grade chromite ore containing 0.5 to 0.9% nickel has never been used in any process in the world following leaching with ammonia - ammonium carbonate solution.
(ii) The results on continuous test work are not available for low-grade chromite ore.
(iii) In all the existing plants oil is mixed with the dried ore prior to feeding to the furnace for reduction, and nowhere in the world reduction step has been carried out without mixing oil to the ore prior to reduction.
(iv) The present plants use compressed air for oxidation and dissolution of nickel in the leaching reactors. The retention time of about six hours is required to complete nickel dissolution and iron precipitation. In order to reduce the retention time, no efforts have been reported.
(v) The use of compressed air during leaching requires elaborate ammonia recovery system to minimize ammonia losses from, the vent gases.
(vi) The leach residues obtained after Ni recovery from the lateritic ore contains primarily magnetite. These residues are being discarded. No efforts have been reported for the utilization of these residues.

Due to lack of information on utilization of low Ni containing material such as low-grade chromite ore, studies have never been done to exploit this resource for the recovery of nickel and cobalt.

### Objects of the Present Invention:

The main objective of the present invention is to provide a process for the extraction of nickel from low-grade chromite ore.

Another objective of the present invention is to enhance leaching rate with gaseous oxygen.

Still another object of the present invention is to use compressed air at elevated pressure in the range of 0.2 to 1.5 Kg./cm² (0.02 to 0.15 MPa) for reducing the retention time during leaching step.

Yet another object of the present invention is to use gaseous oxygen at elevated pressure in the range of 0.5 to 1.5 Kg./cm² (0.05 to 0.15 MPa) for reducing the retention time during leaching step.

One more object of the present invention is to utilize the leach residue for its magnetite content.

### Summary of the Present Invention:

Accordingly, the present invention provides a process for extraction of nickel salt from low-grade chromite ore.

### Brief Description of the Accompanying Drawings:

In the drawings accompanying the specification,
**Figure 1** represents the schematic block diagram of the process of extraction of nickel from chromite over burden.
**Figure 2** represents the process flow diagram for Section 100 (Crushing, Drying and Grinding).
**Figure 3** the process flow diagram for Section 200 (Reduction Roasting).
**Figure 4 (a)** represents the process flow diagram for Section 300 (Leaching with Oxygen gas).
**Figure 4 (b)** represents the process flow diagram for Section 300 (First Stage Leaching with Air).
**Figure 4 (c)** represents the process flow diagram for Section 300 (Second Stage Leaching with Air).
**Figure 5** represents the process flow diagram for Section 400 (counter current decantation).
**Figure 6** represents the process flow diagram for Section 500 (BNC Precipitation, Ammonia removal and recovery).

### Detailed Description of the Present Invention:

The present invention provides a process for extraction of nickel from low-grade chromite ore containing 0.6 to 0.9% nickel, the said process comprises the steps of:
(a) crushing, drying and grinding the chromite ore to obtain crushed chromite ore having particle size ranging between 100 to 400 mesh B.S.S (150 µm to 40 µm) ;
(b) roasting the crushed chromite ore of step (a) to effect reduction;
(c) cooling the roasted ore;
(d) mixing the cooled reduced ore of step (c) with a leaching solution containing ammonia and ammonium carbonate to form a slurry, passing compressed oxygen or air through the shurry and aging the slurry for 45 minutes to 6 hours to effect leaching;
(e) oxidizing the leached slurry of step (d) in presence of excess ammonia to obtain a pregnant leach solution and leach residue;
(f) separating the pregnant leach solution from the leach residue and washing the pulp with ammonia-ammonium carbonate solution, and
(g) stripping ammonia from the pregnant leach solution of step (f) to effect precipitation of dissolved nickel and cobalt in the form of their respective salts.

In an embodiment of the present invention the low-grade chromite ore contains 0.6 to 0.9 wt.% Ni, 0.034 to 0.044 wt.% Co, 43 to 53 wt. % Fe, 2.42 to 2.72 wt. % Cr₂O₃ and 6.9 to 8.8 wt.% Al₂O₃ and the rest being impurities.

In another embodiment of the present invention, wherein in step (a), 85% of the crushed chromite ore have particle size of 200 mesh B.S.S (75 µm).

In yet another embodiment of the present invention, wherein in step (b), crushed low-grade chromite ore is roasted in a multiple hearth furnace at a gas temperature in the range of 600 to 800°C to effect reduction.

In still another embodiment of the present invention, the crushed low-grade chromate ore is fed to the multiple hearth furnace with or without premixing fuel oil.

In one more embodiment of the present invention, the crushed low-grade chromite ore is reduced by passing CO / (CO+ CO₂ and H₂ having a reduction potential of 0.2 to 0.6 through the multiple hearth furnace.

In one another embodiment of the present invention, wherein in step (c), the roasted chromite ore is cooled to a temperature less than 250°C.

In further embodiment of the present invention, wherein in step (d), the leaching solution contains 60 to 90 g/l ammonia and 80 to 120 g/l ammonium carbonate.

In an embodiment of the present invention, wherein in step (d), the pressure of the compressed oxygen or air is in the range of 0.2 to 1.5 Kgs/cm² (0.02 to 0.15 MPa).

In another embodiment of the present invention, if oxygen is used in step (d), the slurry is aged for 45 minutes to 2 hours.

In yet another embodiment of the present invention, if air is used in step (d), the slurry is aged for 3 hours to 6 hours.

In still another embodiment of the present invention, wherein in step (f), the pulp is washed with ammonia ammonium carbonate solution using counter current decantation technique. In one more embodiment of the present invention, wherein in step (g), ammonia is removed from the pregnant leaching solution by passing steam through the same.

In one another embodiment of the present invention, the ammonia removed from the pregnant leaching solution is recovered and re-used.

In a further embodiment of the present invention, wherein in step (g), the dissolved nickel precipitates as basic nickel salt.

In an embodiment of the present invention, the dissolved nickel salt precipitates as basic nickel carbonate. (BCN).

In another embodiment of the present invention, wherein in step (g), the dissolved cobalt co-precipitates along with nickel as cobalt salt.

In yet another embodiment of the present invention, the leach residue obtained in step (f), is used for extracting magnetic fraction.

In still another embodiment of the present invention, the magnetic fraction is obtained is separated by wet magnetic separation technique.

In one more another embodiment of the present invention, the magnetic fraction thus obtained is used for production of low phosphorous iron production.

The novelty of the present invention lies in the following factors:
1) Use of Low Grade Chromite Ore for extraction of nickel, cobalt and iron.
2) Reduction roasting without premix of additive such as oil.
3) Use of oxygen/air during leaching at an elevated pressure.
4) Generation of magnetite residue suitable for coal washeries
5) Generation of low phosphorous containing magnetite for low phosphorous iron production

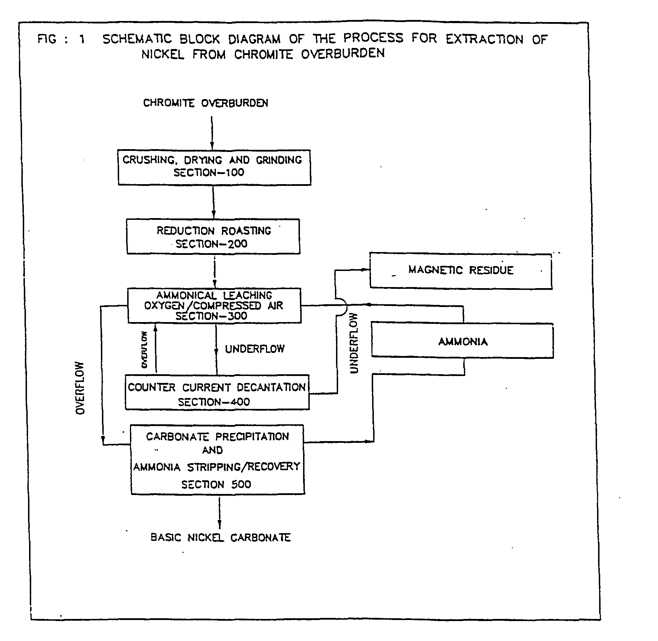

The schematic block diagram of the process is shown in Fig 1. The main steps of the process are divided into following steps.
1. Ore drying and grinding.
2. Reduction roasting
3. Ammonical leaching
4. Counter current washing and decantation
5. Basic nickel carbonate precipitation , ammonia stripping and recovery
6. Testing for residue utilization

A pilot plant has been set up jointly by Council of Scientific and Industrial Research, (CSIR) and Hindustan Zinc Limited (HZL) at the premises of Regional Research Laboratory, Bhubaneswar 751013. The pilot plant used for carrying out the work for the production of nickel salt from low-grade chromite ore is divided into the following five sections. These are:
Section 100: Ore Preparation
Section 200: Reduction Roasting
Section 300: Leaching
Section 400: Counter Current Decantation
Section 500: Precipitation of nickel salt

The other utilities provided are:
1. Producer Gas Generator
2. Instrument Air Compressor
3. Reciprocating Air Compressor
4. Cooling Tower
5. Boiler
6. Fire Extinguisher

The operating principles for each section are described below:

### Ore Preparation (Section 100, Step-1)

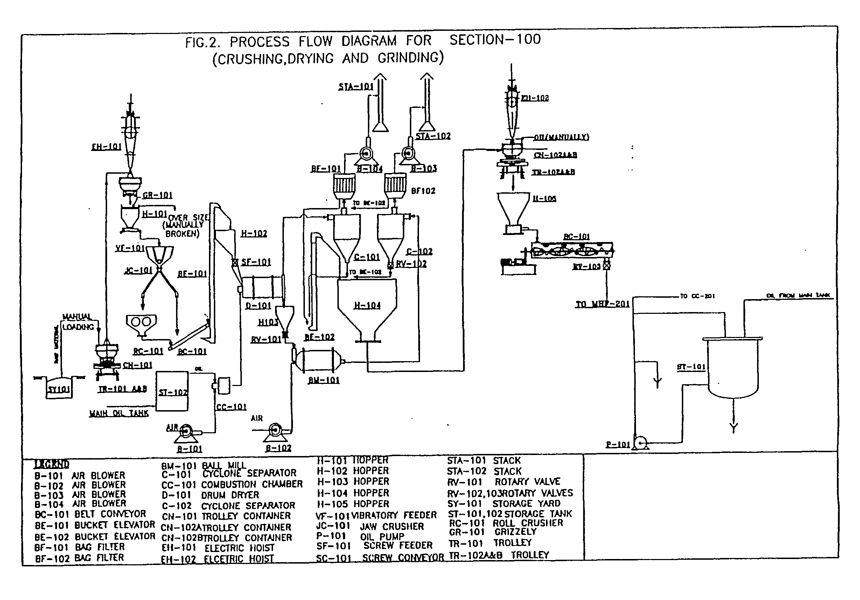

The flow diagram for Section 100 (ore preparation) is shown in Fig 2, The raw material is stored in the storage area SY-101, which is an area at the ground level with suitable curbing on all four sides to avoid spread of material SY-101 is housed inside a covered shed to avoid rain or water ingress. The raw material is loaded manually into container CN-101, mounted on a trolley TR-101. The trolley is placed below the overhead electric hoist EH-101. The electric hoist lifts the container CN-101 and unloads the raw material into a grizzley GR-101. The material with size -50 mm passes through GR-101 and is fed into the hopper H-101. The oversize material is manually broken and fed again to grizzley GR-101.

The material collected in hopper H-101 is fed into a jaw-cum-roll crusher JC-101 through a vibratory feeder VF-101. JC-101 reduces the size of the raw material to -6 mm. The oversize (+ 6 mm) from jaw crusher JC-101 is fed to a roll crusher RC-101. The sized output from the combined unit of Jaw-cum-Roll crusher JC-101 and Roll crusher RC-101 is discharged on a belt conveyor BC-101 which feeds to a bucket elevator BE-101. The bucket elevator delivers the material to an overhead storage bin H-102, which discharges the material to a screw feeder SF-101. The discharge of SF-101 is fed to a drum drier D-101. The material is dried co-currently in drum dryer D-101 by passing products of combustion of oil in the combustion chamber CC-101 of the dryer. ST-102 provides oil to the burner attached to the combustion chamber. This tank receives oil from the main oil storage tank. Air to the combustion chamber is provided by fan/blower B-101. The output from the dryer is dried material with 1-3% free moisture and 10-11% bound moisture. The material from D-101 is collected in a hopper H-103.

The dried materials from hopper H-103 is fed into a ball mill BM-101 at the specified rate through a rotary valve RV-101. The rotary valve also prevents ingress of air to the ball mill when material is being fed into it A blower B-102 supplies air to the ball mill which of air swept type. In the ball mill BM-101, the dried material is reduced in size to 85% -200 mesh B.S.S (75 µm).

The finer part of discharge from drum dryer D-101 goes directly to day storage bin H-104 by bucket elevator BE-102 through a cyclone separator C-101 and BF-101. The discharge from ball mill BM-101 passes through a cyclone separator C-102, rotary valve RV-102, and collected in the day storage bin H-104 by bucket elevator BE-102. The gases/air containing solid particles which comes out of the dryer & ball mill passes through the cyclone separators C-101 and C-102, bag filters BF-101 and BF-102 and gas/air is discharged through blowers B-104 and B-103 to the atmosphere through stacks STA-101 and STA-102 respectively.

The storage bin H-104 has a capacity to store one day's requirement (~10 tons) of dried raw material. The material from H-104 is discharged into a trolley container CN-102A&B which is placed on a trolley TR-102A/B. CN-102A/B has a capacity of ~0.5 tons. Oil (as and when required) is manually mixed with the ore and the trolley is pushed on rails below a hoist EH-102 which lifts the container and discharges the material into the hopper H-105 on top of MHF-201. From the hopper the material is delivered to screw conveyor SC-101 at the required rate. The rate of feeding to MHF-201 can be varied by adjusting the valve provided in the discharge of hopper H-105. A rotary valve RV-103 is provided at the outlet of screw conveyor SC-101 for feeding of COB at a constant rate to MHF. This also avoids escape of flue gases from the MHF into the atmosphere.

The oil storage tank ST-101 receives the oil from main oil storage tank and supplies oil to the combustion chamber of the MHF-201.

### Reduction Roasting (Section 200, Step-2)

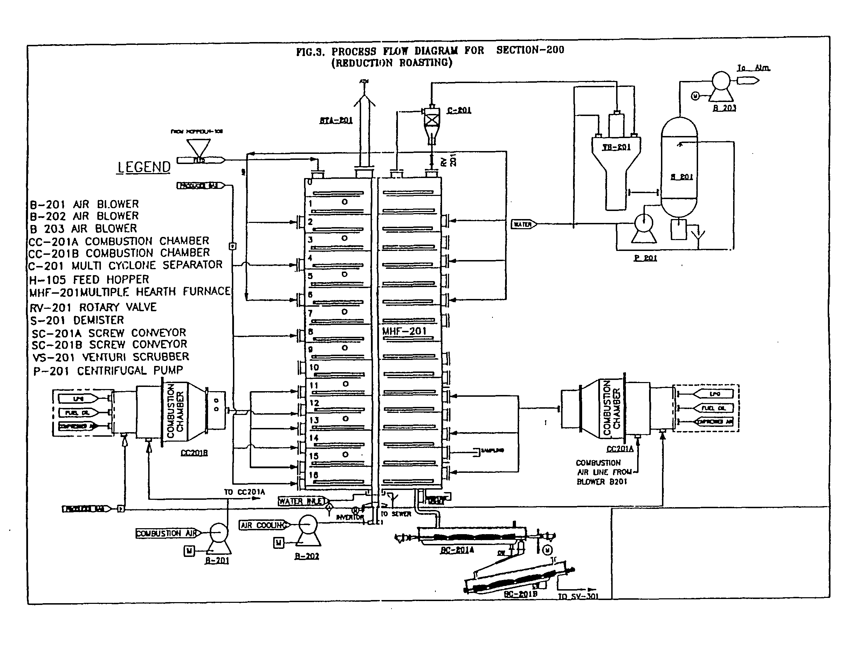

The flow diagram for reduction roasting is given in Fig. 3.

The pre-processed raw material from section 100 (85% - 200 Mesh B.S.S. [75 µm] containing 1-3% free moisture) is fed into the Multiple Hearth Furnace MHF-201 from the hopper H-105. MHF-201 has a capacity to process 500 kg of raw material per hour. The MHF-201 is a 17-hearth furnace (0-16), with four rabble arms per hearth. The raw material in the MHF is heated by means of gases coming from the combustion chambers CC-201 A and B. The products of combustion chambers are fed into the MHP-201 through suitable ducting to deliver the gases at hearth numbers 15,13 and 11. The two combustion chambers are located diametrically opposite to each other. The rabble arms are rotated by means of a central shaft which is air cooled. The cooling air to the shaft is supplied by blower B-202. The hot air after cooling the central shaft is used in the pre heating of hearths and is partly let out through the stack STA-201.

The combustion chambers CC-201A/B are supplied with Light Diesel Oil (LDO) from the oil storage tank ST-101 (ref Fig-2). The combustion air required is supplied by blower B-201. The burners of the combustion chambers are dual fuel fired type, with a provision to bum producer gas also. The oil supply to CC-201A/B is measured by means of flow transmitters.

The MHF-201 can be divided into three zones. The first zone comprising of hearths 0 to 3 is the ore-preheating zone. Hearths 4 to 14 comprise of the reduction roasting zone and hearths 15 and 16 comprise of the soaking zone. The total residence time in the MHF can be controlled by varying the shaft speed. The flue gases composed of CO, CO₂ and H₂ from CC-201A/B come in contact with the feed material through hot gas ducts in the reduction roasting zone and the material gets reduced. The reducing atmosphere is maintained in the MHF-201 by additionally injecting LDO/fresh producer gas through nozzles provided in this zone. The rate of addition of producer gas can be measured by flow transmitter. The desired CO-CO₂ ratio is maintained. The unreacted CO and H₂ in the reducing gas are burnt in the preheating zone by injecting hot air which is provided through the shaft cooling blower B-202. The MHF-201 is provided with nozzles for sampling both gas and solid at various locations. The temperature profile of the MHF-201 is measured and recorded by a multi-point temperature scanner.

The hot flue gases at about 425°C, are let out from MHF-201 from the top. Any solid carry over in the flue gases is recovered in the dust recovery system comprising of a multi cyclone separator C-201. The solids are re-introduced into MHF-201 through motorized rotary valve RV-201. The gases from C-201 are then passed through ventury scrubber VS-201 and demister S-201 before being discharged to the atmosphere by blower B-203. Water is circulated using pump P-201 in the ventury scrubber VS-201 and demister S-201 at a constant rate to cool and clean the exhaust gases.

The reduced low-grade chromite ore from MHF-201 is discharged into a jacketed screw conveyer SC-201A. Cold water is circulated in the jacket for cooling the reduced low-grade chromite ore. The cooled material is further conveyed through another screw conveyer SC-201B into the quench tank SV-301. The temperature of the cooled material is less than 250°C.

### Leaching (Section 300, Step-3)

In the leaching section there are two options namely
(i) Use of oxygen during leaching at elevated pressure
(ii) Use of compressed air at elevated pressure

### Leaching fusing gaseous oxygen at elevated pressure

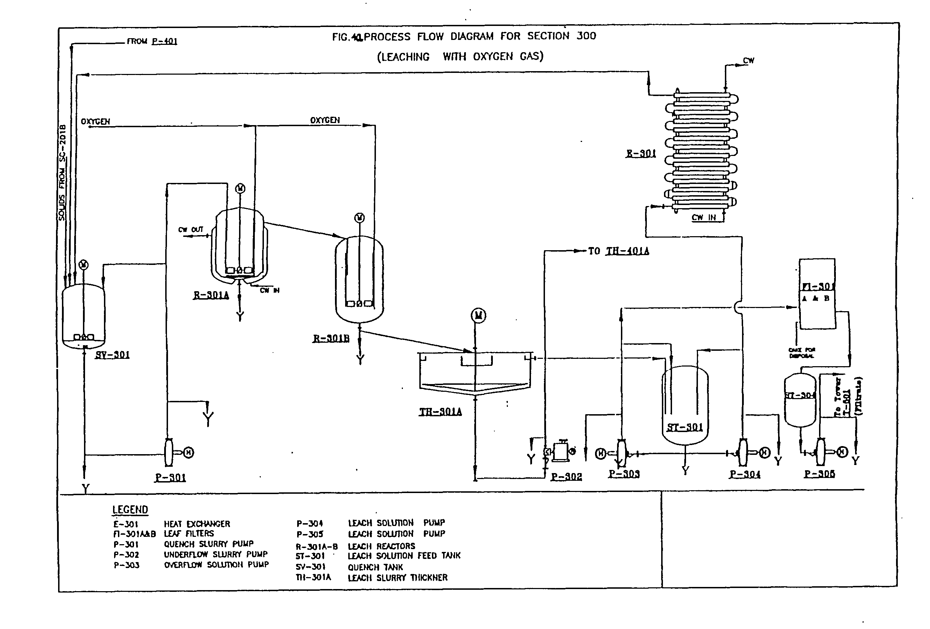

The process flow diagram for leaching with oxygen gas is shown in Fig 4 (a).

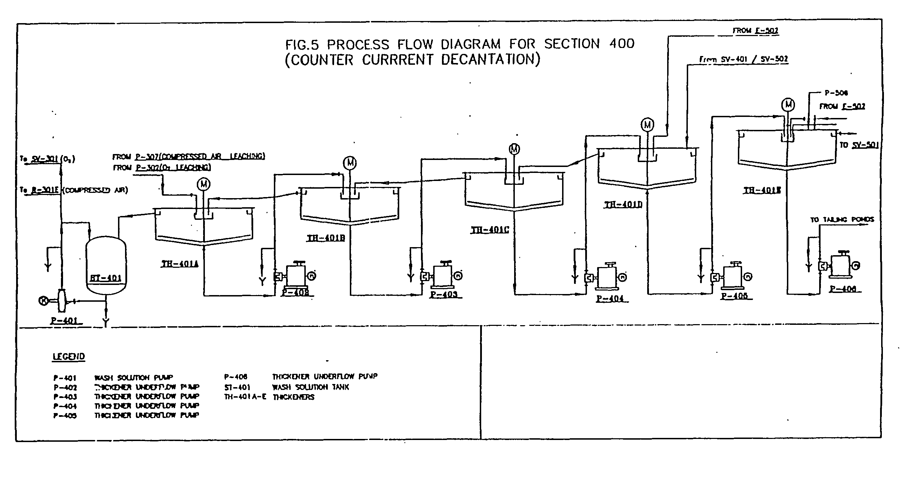

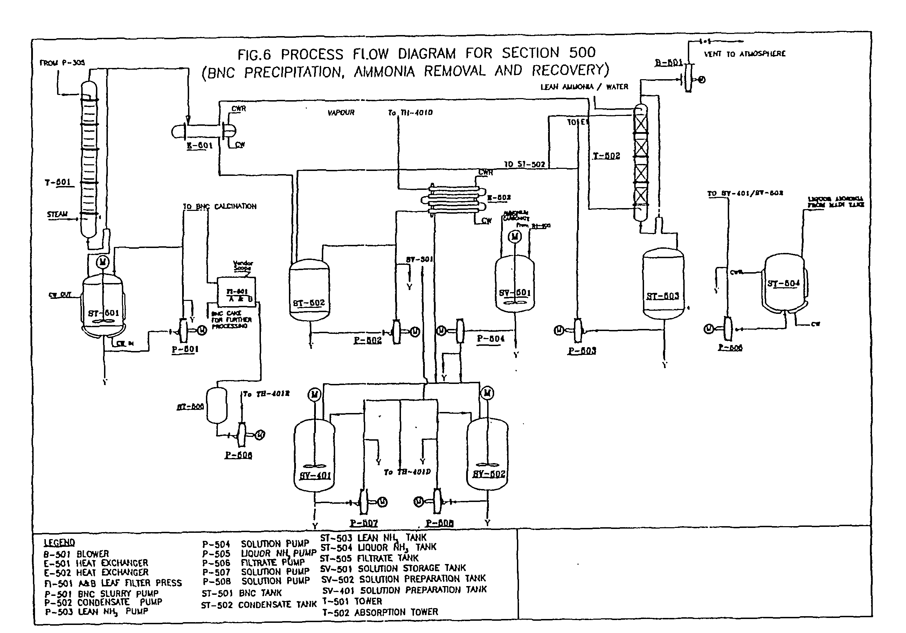

The reduced ore after cooling in SC-201A&B is discharged continuously in a sealed atmosphere into the quench tank SV-301. The quench tank receives solution containing ammonia, ammonium carbonate and nickel through two streams separately from ST-301 by using pump P-304 (after cooling it to about 38°C in a double pipe heat exchanger E-301) and from storage tank ST-401 by using pump P-401 (refer Fig.5). Make up ammonia-ammonium carbonate solution may be fed to the quench tank SV-301 from the solution preparation tanks SV-401/SV-502 using pumps P-507 and P-508 (ref. Fig.6) to obtain the required concentration of leachant. The coolant in E-301 is cooling water. In the quench tank SV-301 the hot solids are added to the quench liquor to form required slurry concentration with an outlet temperature of around 40°C. The quenched slurry is pumped to the first reactor, R-301A by pump P-301. The slurry overflows to reactor R-301B by gravity. Oxygen is supplied to both the leaching reactors by maintaining the desired gauge pressure. Oxygen supply to the reactors is controlled by pressure control valves which are maintained at the desired pressure. The slurry, after leaching is transferred due to the pressure in the reactor R-301B to the leach slurry thickener TH-301A. The oxidizing ammonia leach is done in the presence of excess ammonia to prevent precipitation of nickel and cobalt as hydroxides, resulting in a pH of about 10-11 in the pregnant leach solution. The thickened underflow from TH-301A is pumped to the CCD section by pump P-302 to TH-401A. The overflow from TH-301A flows by gravity to ST-301.

The flow rates of quench slurry, leached slurry, and pregnant leach solution to the section for precipitation of nickel salt and to quench tanks are controlled through valves and the flows are indicated by transmitters/ indicators. As stated above part of the leach solution from the storage tank ST-301 is pumped to SV-301 through the cooler E-301. The other part of the leach liquor goes to filter press FI-301A &B by pump P-303. The filtrate is collected in storage tank ST-304 from where it is fed to the tower T-501 by pump P-305.

### Leaching Using Compressed Air at elevated pressure

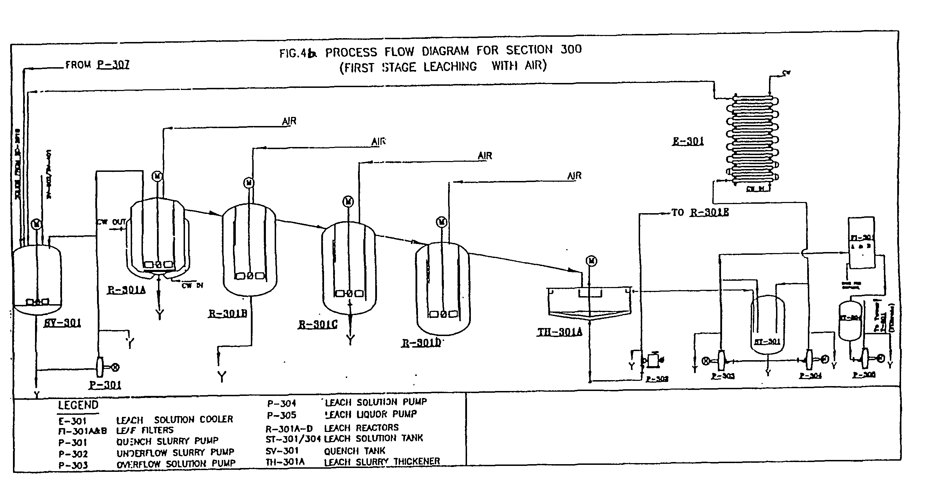

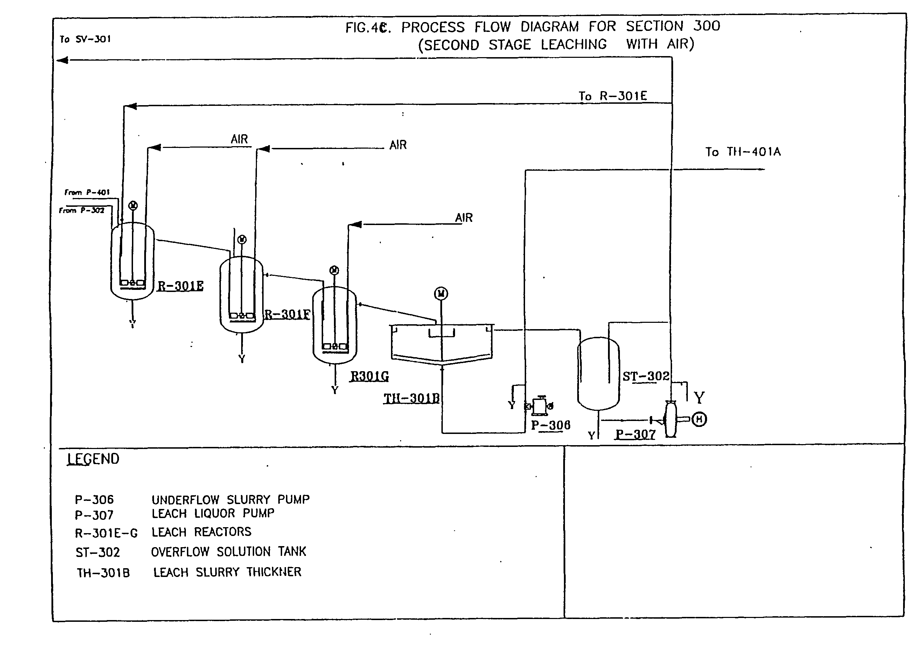

The procedure for leaching with compressed air is similar except that the number of reactors and thickeners are more for providing longer retention time. The flow diagrams for leaching using compressed air are shown in Fig 4 (b) and 4 (c).

In case of air leaching, the leaching operation is carried out in two stages, the first stage consisting of four reactors R-301A to R-301D and the second stage consisting of three reactors R-301E to R-301G. The flow of slurry between the reactors within each stage is by gravity. The last reactor of the first stage R-301D discharges slurry by gravity into the first thickener TH-301A, from where the underflow is pumped into the first reactor of the second stage R-301E. The clear solution overflowing from TH-301A is collected in the storage tank ST-301. A part of this solution is pumped to the quench tank SV-301 through a cooler E-301. Another portion of the leach solution is pumped to the BNC precipitation section (Section 500) through a batch filters FI-301A & B for further processing. The filter is used to remove any residual solids from the leach solution.

The thickened underflow from TH-301A is pumped by P-302 to the first reactor R-301E of the second stage leaching. From R-301E, the slurry flows to reactors R-301F and R-301G and finally to the thickener TH-301B by gravity. The clear solution from TH-301B is collected in storage tank ST-302 and a part of it is pumped to the quench tank and another part is recycled back to R-301E, by pump P-307. The underflow from TH-301B is pumped to the CCD section (sec. 400) by pump P-306. The vents are connected to a ventury scrubbing system.

### Counter Current Decantation (Section 400, Step- 4)

In this section, separation of pregnant leach solution from leach residue and washing of the pulp with ammonia-ammonium carbonate solution is carried out using a series of thickeners TH-401A, B, C, D and E as shown in Fig.5. The washing of the leach residue is done counter currently. The underflow slurry is pumped from one thickener to another by pumps P-402 to P-405. Pump P-406 is used to discard the washed slurry from TH-405 to the tailings pond. The flow of slurry and flow of clear overflow from one thickener to another is as shown in the Fig.5.

### Precipitation of nickel salt and Ammonia Recovery (Section 500, Step- 5)

The flow diagram for this section is given in Fig. 6. The leach solution containing dissolved nickel from the leach solution storage tank ST-304 is pumped by P-305 to the top of a stripping column, T-501. Steam is admitted at the desired pressure from the bottom of the column for stripping of ammonia and carbon dioxide from the pregnant leach solution. The descending solution is gradually depleted of ammonia until nickel precipitates as basic nickel carbonate (BNC). The dissolved cobalt also co-precipitates in this step.

The mixed nickel and cobalt salt is precipitated in the column is discharged from the bottom at <100°C as a slurry of ~1% solids and collected in BNC tank ST-501 and is cooled with water circulation before pumping it to batch filter FI-501A/B. The cake from the filter is recovered, weighed and analyzed for nickel and other metals. The filtrate is collected in the storage tank ST-505 and pumped to the thickener TH-401E for washing of the final tailings coming from thickener TH-401D of section 400.

The vapors from the tower T-501 are condensed in the heat exchanger E-501. The gases are cooled by cooling water circulation in it. The condensed liquid containing ammonia is collected in the condensate tank ST-502. The uncondensed vapors from E-501 are sent to an absorption tower T-502 for the recovery of residual ammonia. The gases are scrubbed with fresh water fed from the top of the tower T-502 and or by re-circulation of lean ammonia solution from ST-503. The vapors free of ammonia are discharged to the atmosphere. The ammonia solution from ST-502 is cooled in a water cooled double piped heat exchanger E-502 and is pumped to ammonia - ammoium carbonate preparation tanks SV-401/ SV-502.

For startup and make up for losses in ammonia, liquor ammonia from days storage tank ST-504 is charged to solution preparation tanks SV-401/ SV-502 using pumps P-507 and P-508. Make up ammonium carbonate is added manually to SV-401 / SV-502. While preparing these solutions, the recovered ammonia -ammonium carbonate from storage tank ST-502 and lean ammonia solution from storage tank ST-503 are utilized.

### Start- up

The process of the present invention is directed towards a continuous process in which the low-grade chromite ore is continuously processed in the pilot plant to produce nickel and cobalt salt. In order to reach a continuous steady state, various vessels need to be loaded with start up materials.

### Section 100

First of all, truck loads of nickel containing low grade chromite ore from Orissa Mining Corporation's chromite mines site at Sukinda area of Orissa, were brought to the pilot plant site and stored in the storage area provided for the purpose. The ore was treated as described in section 100 and stored in hopper H-104. Depending on the feed rate to the reduction furnace this section operated for eight to twelve hours a day.

### Section 200

After erection of furnace, the burners of the two combustion chambers CC-201A and B are fired one by one. The curing of refractories was done by slowly raising the temperature up-to 800°C over a total period of 110 hours. To start operation of the furnace, the dead bed of ore on hearths was filled up. Grounded ore from H-105 is fed to the furnace through SC-101. The rabble arm was kept in motion as the ore after filling the top hearth moves down to fill the lower hearths. Ore was continuously fed to the furnace. W order to achieve the desired reducing atmosphere, the air to the combustion chamber was reduced to approximately sixty percent of the total theoretical air requirement. On attainment of desired temperature (700-800°C in reduction zone), the dried ore with or without addition of light diesel oil is charged at the required rate varying between 200 to 500 kgs/hr. The reducing atmosphere is maintained in the furnace in order to complete the reduction reactions. To avoid ingress of air, the furnace is kept under positive pressure. The reduced material is discharged to screw conveyers SC-201A and SC-201B (jackeed), where it gets cooled to <250°C. The cooled material is fed to quench tank SV-301. The tank should be filled with ammonia -ammonium carbonate solution of required composition as described in leaching section start up procedure.

### Section 300 and 400

Before feeding of reduced ore to section 300, various reactors and thickeners in section 300 and 400 were filled with solution containing ammonia and ammonium carbonate of required composition. The solution was prepared in preparation tanks SV-401 and SV-502. The solution was prepared in batches of 3 kiloliters by adding water, ammonium carbonate and liquor ammonia. From these tanks, the solution was charged to SV-301 and from SV-301 the solution was filled to all the reactors, thickeners and storage tanks of section 300 and 400.

### Section 500

In Section 500 no equipment was required to be loaded with any solution/solids prior to feeding the nickel containing leach liquor for ammonia stripping and basic nickel carbonate precipitation. The steam required to accomplish stripping of ammonia was supplied by an oil-fired boiler.

The process briefly comprises of material preparation and drying, reduction-roasting, leaching with ammonia-ammonium carbonate in the presence of air or oxygen at elevated pressure , recovery of nickel as nickel salt after removing ammonia and ammonium carbonate and obtaining a residue which is suitable for coal washeries or for iron production.

The following examples are given by way of illustration and therefore should not be construed to limit the scope of the present invention

### Examples

The low grade chromite ore having about 0.5 to 0.9 % Ni (dry basis) and moisture content varying between 15 to 40% was used as the raw material in the ore drying and grinding section. The various samples collected from the output from this section had the composition range given in Table1. These materials were used as feed to the furnace.

**Table1 Analysis of different samples of chromite mine overburden**

| S1 no | LOI* 800°C | Ni % | Co % | Fe % | Acid insoluble | CaO % | MgO % | Cr₂O₃ % | Mn % | Cu % | Al₂O₃ % |
|---|---|---|---|---|---|---|---|---|---|---|---|
| 1 | 9.6 | 0.8 | 0.034 | 49.0 | 15.4 | 0.11 | 0.16 | 2.65 | 0.30 | <0.005 | 7.5 |
| 2 | 10.7 | 0.9 | 0.035 | 53.0 | 11.5 | 0.07 | 0.14 | 2.72 | 0.31 | <0.005 | 7.7 |
| 3 | 11.2 | 0.8 | 0.035 | 51.7 | 15.0 | 0.09 | 0.17 | 2.58 | 0.31 | <0.005 | 7.3 |
| 4 | 11.0 | 0.7 | 0.038 | 51.5 | 17.2 | 0.12 | 0.15 | 2.50 | 0.31 | <0.005 | 8.2 |
| 5 | 10.3 | 0.6 | 0.044 | 43.0 | 20.2 | 0.09 | 0.27 | 2.42 | 0.31 | <0.005 | 8.8 |
| 6 | 10.5 | 0.7 | 0.042 | 51.0 | 17.0 | 0.09 | 0.17 | 2.67 | 0.32 | <0.005 | 7.5 |
| 7 | 10.8 | 0.8 | 0.037 | 52.0 | 12.6 | 0.10 | 0.17 | 2.69 | 0.30 | <0.005 | 6.9 |
| 8 | 11.0 | 0.8 | 0043 | 49.3 | 11.4 | 0.10 | 0.19 | 2.36 | 0.31 | <0.005 | 7.2 |

The material was crushed, dried and ground to get 85% fraction as -200 mesh B.S.S (75µm). The average moisture content after drying was ∼ 1-2%.

The dried ore was mixed with 0-5% fuel oil. The specific conditions and results obtained are given below:

Variation of parameters in the multiple hearth furnace was studied by feeling the dried low grade chromite ore continuously to the MHF and by carrying out the leaching of samples collected from the sampling point provided at the inlet of quench tank. These samples were leached under the conditions established in the laboratory to get maximum leaching efficiency.

### Example 1

| | |
|---|---|
| Feed rate to the multiple hearth furnaces : | 300kg/hour |
| Oil in feed : | 5% |
| Time of running the experiment. : | 48 hours |
| Retention time in the furnace : | 90 minutes |
| Temperature of gas in reduction zone : | 600-700°C |
| Chamber temperature : | ∼1250-1350°C |
| Oil feed to the combustion chamber : | 26- 30 liters/hour |
| Overall Extraction Eff. in reduction -leaching : | ∼60% |

### Example 2

| | |
|---|---|
| Feed rate to the multiple hearth furnaces : | 300kg/hour |
| Oil in feed : | 5% |
| Time of running the experiment. : | 72 hours |
| Retention time in the furnace : | 90 minutes |
| Temperature of gas in reduction zone : | 700-800°C |
| Chamber temperature : | ∼1350-1450°C |
| Oil feed to the combustion chamber : | 26- 30 liters/hour |
| Overall Extraction Eff. in reduction -leaching : | 78% |

### Example 3

| | |
|---|---|
| Feed rate to the multiple hearth furnaces : | 3001cg/hour |
| Oil in feed : | 2.5% |
| Time of running the experiment. : | 216 hours |
| Retention time in the furnace : | 90 minutes |
| Temperature of gas in reduction zone : | 700-800°C |
| Chamber temperature : | ∼1350 -1450°C |
| Oil feed to the combustion chamber : | 29- 30 liters/hour |
| Overall Extraction Eff. in reduction -leaching : | 77.5% |

### Example 4

| | |
|---|---|
| Feed rate to the multiple hearth furnaces : | 300kg/hour |
| Oil in feed : | nil |
| Time of running the experiment. : | 28 hours |
| Retention time in the furnace : | 90 minutes |
| Temperature of gas in reduction zone : | 700-800°C |
| Chamber temperature : | ∼1350 -1450°C |
| Oil feed to the combustion chamber : | 29- 30 liters/hour |
| Overall Extraction Eff. in reduction -leaching : | 75% |

### Examples of Continuous Reduction-Leaching Results

### Example-5 (Leaching using compressed air without maintaining elevated pressure)

| | |
|---|---|
| Reduction conditions | |
| Feed rate : | 300kg/hour, |
| Retention time in the furnace : | 90 minutes, |
| Temperature of gas in reduction zone : | 700-800°C |
| Oil in feed : | 2.5%, |
| Chamber temperature : | ∼1350-1450C |
| Oil feed to the combustion chamber : | 29- 30 liters/hour |
| Leaching conditions: | |
| Time of continuous operation : | 72 hours |
| Ammonia concentration (total) : | 30-40g/l |
| CO₂ : | 15-20 g/l |
| Retention time : | 4.5 hours |
| Flow rate in leaching reactors : | 1.6KL/bour |
| Compressed air | |
| Reactor1 : | 15kg/hour |
| Reactor2 : | ∼15kg/how |
| Reactor3 : | ∼15 kg/hour |
| Reactor 4 : | ∼15 kgs/hour |
| Overall Extraction Eff. in reduction -leaching : | -40% |

### Example-6 (leaching using compressed air maintaining 0.2 kg/cm2 [0.02MPa] in the first two reactors)

| | |
|---|---|
| Reduction conditions | |
| Feed rate : | 300kg/hour, |
| Retention time in the furnace : | 90 minutes, |
| Temperature of gas in reduction zone : | 700-800°C |
| Oil in feed : | 2.5%, |
| Chamber temperature : | ∼1350-1450°C |
| Oil feed to the combustion chamber : | 29- 30 liters/hour |
| Leaching conditions: | |
| Time of continuous operation : | 48 hours |
| Ammonia, concentration (total) : | 85 to 100g/l |
| CO₂ : | 55-65 g/l |
| Retention time : | 4 hours |
| Flow rate in leaching reactors : | 1.6KL/hour |
| Compressed air | |
| Reactor1 : | 20 kg/hour |
| Reactor2 : | 20kg/hour |
| Rector3 : | 20 kg/hour |
| Reactor4 : | 20kgs/how |
| Overall Extraction Eff. in reduction -leaching : | ∼77% |

### Example-7 (Leaching with compressed air maintaining 0.2 kg/cm² [0.02MPa] in first two reactors)

| | |
|---|---|
| Reduction conditions | |
| Feed rate : | 450kg/hour, |
| Retention time in the furnace : | 90 minutes, |
| Temperature of gas in reduction zone : | 700-800°C |
| Oil in feed : | 2.5%, |
| Chamber temperature : | ∼1350-1450C |
| Oil feed to the combustion chamber : | 29- 30 liters/hour |
| Leaching conditions: | |
| Time of continuous operation : | 288 hours |
| Ammonia concentration (total) : | 60-75 g/l |
| CO₂ : | 45-50 g/l |
| Retention time : | -4.5 hours |
| Flow rate in leaching reactors : | ∼2.5KL/hour |
| Compressed air | |
| Reactor 1 : | ∼22 kg/hour |
| Reactor2 : | ∼22kg/hour |
| Reactor3 : | ∼20kg/hour |
| Reactor4 : | ∼20kgs/hour |
| Reactor5 : | ∼10kgs/hour |
| Reactor6 : | ∼10kgs/hour |
| Reactor 7 : | ∼10kgs/hour |
| Overall recovery in reduction -leaching : | ∼78% |

### Example 8 (leaching using oxygen gas)

| | |
|---|---|
| Reduction conditions | |
| Feed rate : | 300kg/hour |
| Retention time in the furnace : | 90 minutes |
| Temperature of gas in reduction zone : | 700-800°C |
| Oil in feed : | 2.5% |
| Chamber temperature : | ∼1350 -1450°C |
| Oil feed to the combustion chamber : | 29- 30 liters/hour |
| Leaching conditions: | |
| Time of continuous operation : | 72 hours |
| Ammonia concentration (total) : | 85-90g/l |
| CO₂ : | 3 5-40 g/l |
| Retention time : | one hour |
| Flow rate in leaching reactors : | ∼1.6KL/hour |
| Oxygen partial pressure : | 0.7-0.8kg/m² (0.07-0.08MPa) |
| Overall recovery in reduction-leaching: : | ∼76% |

### Example 9 leaching using oxygen

| | |
|---|---|
| Reduction conditions | |
| Feed rate : | 500kg/hour |
| Retention, time in the furnace : | 90 minutes |
| Temperature of gas in reduction zone : | 700-800°C |
| Oil in feed : | 2.5% |
| Chamber temperature : | ∼1350 -1450°C |
| Oil feed to the combustion chamber : | 29- 30 liters/hour |
| Leaching conditions: | |
| Time of conitinuous operation : | 72 hours |
| Ammonia concentration (total) : | 85-90g/l |
| CO₂ : | 35-40 g/l |
| Retention time : | one hour |
| Flow rate in leaching reactors : | ∼1.6KL/hour |
| Oxygen partial pressure : | 0.7-0.8kg/cm² (0.07-0.08MPa) |
| Overall recovery in reduction -leaching : | ∼76% |

### Example 10 Ammonia stripping and recovery

| | |
|---|---|
| Initial analysis of leach solution : | Ni 5.6g/l. NH₃ 80-85g/l |
| Conditions for stripping | |
| Tower temperature : | 100-130°C 100-103°C |
| Inlet pressure of steam : | 2.4-2.6kgs/hour 24-2.5kg/hour |
| Stripping efficiency : | 98% |
| Ni precipitation efficiency : | 99% |

Analysis of Nickel carbonate obtained
Ni 49.5%, Co 0.54%, Fe 0.83%, Mn 0.9%, MgO 0.21%, Cr₂O₃, Cu 0.7%

### Example 11 Treatment of the leach residue (step 6)

A typical leach residue containing 0.21% Ni, 46% Fe and 21.2% acid insoluble was taken for wet magnetic separation. Nine tonnes of residue was subjected to low intensity wet magnetic separation to get magnetite concentrate and reject containing gangue materials. The analysis of the magnetic material (5.6 tonnes) was iron 56%, acid insolubles 9% phosphorous 0.016%. This material can be used in coal beneficiation plant as heavy media separation or for iron making using smelting technique.

**The main advantages of the invention for this process are:**
1. Low grade Chromite ore, which is a waste material can be utilized to recover strategic metals like nickel and cobalt.
2. The dried and ground material can be fed to the furnace without mixing oil.
3. The retention time for complexion of nickel dissolution and iron precipitation is reduced to 0.5 to 2 hours from six hours as practiced in the existing plants when oxygen is used and to 4.5 hours when compressed air is used by maintaining an elevated pressure of ∼ 0.2 kg/cm² (0.02MPa).
4. Use of oxygen gas during leaching eliminates the need of elaborate ammonia recovery system and thus minimizes ammonia losses in the plant operation.
5. The iron content of the leach residue can be upgraded by wet magnetic separation. The upgraded material due to its fineness can be used for heavy media separation in coal washeries. This material is also suitable for iron production due less phosphorus content.

## Claims

1. A process for extraction of nickel from low-grade chromite ore containing 0.6 to 0.9% nickel, the said process comprises the steps of:
(a) crushing, drying and grinding the chromite ore to obtain crushed chromite ore having particle size ranging between 100 to 400 mesh B.S.S (150 µm to 40µm);
(b) roasting the crushed chromite ore of step (a) to effect reduction;
(c) cooling the roasted ore;
(d) mixing the cooled reduced ore of step (c) with a leaching solution containing ammonia and ammonium carbonate to form a slurry, passing compressed oxygen or air through the slurry and aging the slurry for 45 minutes to 6 hours to effect leaching;
(e) oxidizing the leached slurry of step (d) in presence of excess ammonia to obtain a pregnant leach solution and leach residue;
(f) separating the pregnant leach solution from the leach residue and washing the pulp with ammonia-ammonium carbonate solution;
(g) stripping ammonia from the pregnant leach solution of step (f) to effect precipitation of dissolved nickel and cobalt in the form of their respective salts.

2. A process as claimed in claim 1, wherein the low-grade chromite ore contains 0.6 to 0.9 wt. % Ni, 0.034 to 0.044 wt. % Co, 43 to 53 wt. % Fe, 2.42 to 2.72 wt. % Cr₂O₃ and 6.9 to 8.8 wt. % Al₂O₃ and the rest being impurities.

3. A process as claimed in claim 1 wherein in step (a), 85% of the chromite ore have particle size of 200 mesh B.S.S (75µm).

4. A process as claimed in claim 1 wherein in step (b), crushed low-grade chromite ore is roasted in a multiple hearth furnace at a gas temperature in the range of 600 to 800°C to effect reduction.

5. A process as claimed in claim 4 wherein, the crushed low-grade chromite ore is fed to the multiple hearth furnace with or without premixing fuel oil.

6. A process as claimed in claim 4 wherein, the crushed low-grade chromite ore is reduced by passing CO / (CO+ CO₂) and H₂ having a reduction potential of 0.2 to 0.6 through the multiple hearth furnace.

7. A process as claimed in claim 1 wherein in step (c), the roasted chromite ore is cooled to a Temperature less than 250°C.

8. A process as claimed in claim 1 wherein in step (d), the leaching solution contains 60 to 90 g/l ammonia and 80 to 120 g/l ammonium carbonate.

9. A process as claimed in claim 1 wherein in step (d), the pressure of the compressed Oxygen or air is in the range of 0.2 to 1.5 Kgs/cm² (0.02. to 0.15 MPa).

10. A process as claimed in claim 1 wherein if oxygen is used in step (d), the slurry is aged for 45 minutes to 2 hours.

11. A process as claimed in claim 1 wherein if air is used in step (d), the slurry is aged for 3 hours to 6 hours.

12. A process as claimed in claim 1 wherein in step (f), the pulp is ,washed with ammonia-ammonium carbonate solution using counter current technique.

13. A process as claimed in claim 1 wherein in step (g), ammonia is removed from the pregnant leaching solution bypassing steam through the same.

14. A process as claimed in claim 13, wherein the ammonia removed from the pregnant leaching solution is recovered and re-used.

15. A process as claimed in claim 1 wherein in step (g), the dissolved nickel precipitates as basic nickel salt.

16. A process as claimed in claim 15, wherein the dissolved nickel salt precipitates as basic nickel carbonate (BCN).

17. A process as claimed in claim 1 wherein in step (g), the dissolved cobalt co-precipitates along with nickel as cobalt salt.

18. A process as claimed in claim 1 wherein in the leach residue obtained in step (f), is used for extracting magnetic fraction.

19. A process as claimed in claim 18, wherein the magnetic fraction is obtained is separated by wet magnetic separation technique.

20. A process as claimed in claim 18, wherein the magnetic fraction thus obtained is used for production of low phosphorous iron production.

## Patentansprüche

1. Verfahren zur Gewinnung von Nickel aus minderwertigem Chromerz, das 0,6 bis 0,9% Nickel enthält, wobei das Verfahren folgende Schritte umfasst:
(a) Zerkleinern, Trocknen und Mahlen des Chromerzes, um zerkleinertes Chromerz zu erhalten, das eine Partikelgröße im Bereich zwischen 100 bis 400 Mesh B.S.S. (150 µm bis 40 µm) hat;
(b) Rösten des zerkleinerten Chromerzes von Schritt (a), um eine Reduktion zu bewirken;
(c) Kühlen des gerösteten Erzes;
(d) Mischen des gekühlten, reduzierten Erzes von Schritt (c) mit einer Lauge, die Ammoniak und Ammoniumkarbonat enthält, um eine Schlämme herzustellen, Durchsetzen der Schlämme mit unter Druck gesetztem Sauerstoff oder Luft und Altern der Schlämme für 45 Minuten bis 6 Stunden, um ein Auslaugen zu bewirken;
(e) Oxidieren der ausgelaugten Schlämme von Schritt (d) in Gegenwart von überschüssigem Ammoniak, um eine Mutterauslauglösung und Auslaugrückstände zu erhalten;
(f) Trennen der Mutterauslauglösung von den Auslaugrückständen und Spülen der Pulpe mit einer Ammoniak-Ammoniumkarbonatlösung;
(g) Abstreifen des Ammoniaks von der Mutterauslauglösung von Schritt (f), um die Ausfällung von gelöstem Nickel und Kobalt in Gestalt ihrer jeweiligen Salze zu bewirken.

2. Verfahren nach Anspruch 1, bei dem das minderwertige Chromerz 0,6 bis 0,9 Gew.-% Ni, 0,034 bis 0,044 Gew.-% Co, 43 bis 53 Gew.-% Fe, 2,42 bis 2,72 Gew.-% Cr₂O₃ und 6,9 bis 8,8 Gew.-% Al₂O₃ enthält und der Rest Verunreinigungen sind.

3. Verfahren nach Anspruch 1, bei dem bei Schritt (a) 85% des Chromerzes eine Partikelgröße von 200 Mesh B.S.S. (75 µm) haben.

4. Verfahren nach Anspruch 1, bei dem bei Schritt (b) das zerkleinerte minderwertige Chromerz in einem Etagenofen bei einer Gastemperatur im Bereich von 600 bis 800°C geröstet wird, um die Reduktion zu bewirken.

5. Verfahren nach Anspruch 4, bei dem das zerkleinerte, minderwertige Chromerz einem Etagenofen mit oder ohne vorheriger Beimischung von Brennstofföl zugeführt wird.

6. Verfahren nach Anspruch 4, bei dem das zerkleinerte, minderwertige Chromerz reduziert wird, indem CO / (CO+ CO₂) und H₂, das ein Reduktionspotential von 0,2 bis 0,6 hat, durch den Etagenofen geleitet wird.

7. Verfahren nach Anspruch 1, bei dem bei Schritt (c) das geröstete Chromerz auf eine Temperatur von weniger als 250°C gekühlt wird.

8. Verfahren nach Anspruch 1, bei dem bei Schritt (d) die Auslauglösung 60 bis 90 g/l Ammoniak und 80 bis 120 g/l Ammoniumkarbonat enthält.

9. Verfahren nach Anspruch 1, bei dem bei Schritt (d) der Druck des komprimierten Sauerstoffs oder der Luft zwischen 0,2 und 1,5 Kgs/cm² (0,02 und 0,15 MPa) liegt.

10. Verfahren nach Anspruch 1, bei dem, sofern Sauerstoff bei Schritt (d) verwendet wird, die Schlämme für 45 Minuten bis 2 Stunden gealtert wird.

11. Verfahren nach Anspruch 1, bei dem, sofern Luft bei Schritt (d) verwendet wird, die Schlämme für 3 Stunden bis 6 Stunden gealtert wird.

12. Verfahren nach Anspruch 1, bei dem in Schritt (f) die Pulpe mit einer Ammoniak-Ammoniumkarbonatlösung unter Anwendung der Gegenstromtechnik gespült wird.

13. Verfahren nach Anspruch 1, bei dem bei Schritt (g) Ammoniak aus der Mutterauslauglösung entfernt wird, indem Dampf durch dieselbe geleitet wird.

14. Verfahren nach Anspruch 13, bei dem das Ammoniak, das aus der Mutterauslauglösung entfernt wird, wiedergewonnen und wiederverwendet wird.

15. Verfahren nach Anspruch 1, bei dem bei Schritt (g) das gelöste Nickel als basisches Nickelsalz ausfällt.

16. Verfahren nach Anspruch 15, bei dem das gelöste Nickelsalz als basisches Nickelkarbonat (BCN) ausfällt.

17. Verfahren nach Anspruch 1, bei dem bei Schritt (g) das gelöste Kobalt zusammen mit Nickel als Kobaltsalz ausfällt.

18. Verfahren nach Anspruch 1, bei dem die Auslaugrückstände in Schritt (f) zum Extrahieren einer magnetischen Fraktion verwendet werden.

19. Verfahren nach Anspruch 18, bei dem die gewonnene magnetische Fraktion durch eine Magnet-Nasstrenntechnik getrennt wird.

20. Verfahren nach Anspruch 18, bei dem die magnetische Fraktion, die auf diese Weise gewonnen wird, für die Herstellung von Eisen mit geringem Phosphorgehalt verwendet wird.

## Revendications

1. Procédé d'extraction de nickel à partir de minerai de chromite pauvre contenant 0,6 % à 0,9 % de nickel, ledit procédé comprend les étapes consistant à:
(a) concasser, sécher et broyer le minerai de chromite pour obtenir un minerai de chromite concassé ayant une taille de particules comprise entre 100 et 400 mesh BSS (150 µm à 40 µm) ;
(b) griller le minerai de chromite concassé de l'étape (a) pour réaliser une réduction ;
(c) refroidir le minerai concassé;
(d) mélanger le minerai réduit refroidi de l'étape (c) avec une solution de lixiviation contenant de l'ammoniaque et du carbonate d'ammonium pour former une suspension, faire passer de l'oxygène ou de l'air comprimé à travers la suspension et faire vieillir la suspension pendant 45 minutes à 6 heures pour réaliser une lixiviation;
(e) oxyder la suspension lixiviée de l'étape (d) en présence d'un excès d'ammoniaque pour obtenir une solution de lixiviation enrichie et des résidus de lixiviation ;
(f) séparer la solution de lixiviation enrichie des résidus de lixiviation et laver la pulpe avec une solution d'ammoniaque-carbonate d'ammonium ;
(g) extraire l'ammoniaque de la solution de lixiviation enrichie de l'étape (f) pour réaliser la précipitation du nickel et du cobalt dissous sous la forme de leurs sels respectifs.

2. Procédé selon la revendication 1, dans lequel le minerai de chromite pauvre contient 0,6 % à 0,9 % en poids de Ni, 0,034 % à 0,044 % en poids de Co, 43 % à 53 % en poids de Fe, 2,42 % à 2,70 % en poids de Cr₂O₃ et 6,9 % à 8,8 % en poids de Al₂O₃ et le reste étant des impuretés.

3. Procédé selon la revendication 1, dans lequel dans l'étape (a), 85 % des minerais de chromite ont une taille de particules de 200 mesh BSS (75 µm).

4. Procédé selon la revendication 1, dans lequel dans l'étape (b), le minerai de chromite pauvre concassé est grillé dans un four à soles multiples à une température du gaz dans le domaine de 600° C à 800° C pour réaliser une réduction.

5. Procédé selon la revendication 4, dans lequel le minerai de chromite pauvre concassé est alimenté vers le four à soles multiples avec ou sans prémélange avec du mazout.

6. Procédé selon la revendication 4, dans lequel le minerai de chromite pauvre concassé est réduit en faisant passer du CO / (CO + CO₂) et H₂ ayant un potentiel de réduction de 0,2 à 0,6 à travers le four à soles multiples.

7. Procédé selon la revendication 1, dans lequel dans l'étape (c), le minerai de chromite grillé est refroidi à une température inférieure à 250 °C.

8. Procédé selon la revendication 1, dans lequel dans l'étape (d), la solution de lixiviation contient 60 à 90 g/l d'ammoniaque et 80 à 100 g/l de carbonate d'ammonium.

9. Procédé selon la revendication 1, dans lequel dans l'étape (d), la pression de l'oxygène ou de l'air comprimé est comprise dans le domaine de 0,2 à 1,5 kg/cm² (0,02 à 0,15 MPa).

10. Procédé selon la revendication 1, dans lequel si de l'oxygène est utilisé dans l'étape (d), la suspension est vieillie pendant 45 minutes à 2 heures.

11. Procédé selon la revendication 1, dans lequel si de l'air et utilisé dans l'étape (d) la suspension est vieillie pendant 3 heures à 6 heures.

12. Procédé selon la revendication 1, dans lequel dans l'étape (f), la pulpe est lavée avec une solution d'ammoniaque-carbonate d'ammonium en utilisant une technique à contre-courant.

13. Procédé selon la revendication 1, dans lequel dans l'étape (g), l'ammoniaque est extraite de la solution de lixiviation enrichie en faisant passer de la vapeur d'eau à travers celle-ci.

14. Procédé selon la revendication 13, dans lequel l'ammoniaque extraite de la solution de lixiviation enrichie est récupérée et réutilisée.

15. Procédé selon la revendication 1, dans lequel dans l'étape (g), le nickel dissous précipite sous forme d'un sel de nickel basique.

16. Procédé selon la revendication 15, dans lequel le sel de nickel dissous précipite sous forme d'un carbonate de nickel basique (BCN).

17. Procédé selon la revendication 1, dans lequel dans l'étape (g), le cobalt dissous co-précipite conjointement avec le nickel sous forme d'un sel de cobalt.

18. Procédé selon la revendication 1, dans lequel les résidus de lixiviation obtenus dans l'étape (f), sont utilisés pour extraire une fraction magnétique.

19. Procédé selon la revendication 18, dans lequel la fraction magnétique qui est obtenue est séparée par une technique de séparation magnétique en voie humide.

20. Procédé selon la revendication 18, dans lequel la fraction magnétique ainsi obtenue est utilisée pour la production de fer pauvre en phosphore.
